# EUROPEAN PATENT SPECIFICATION

(11) **EP 1 475 854 B1**
(45) Date of publication and mention of the grant of the patent: **18.11.2009**
(21) Application number: 02786207.7
(22) Date of filing: 24.12.2002
(51) Int. Cl.: H01M 2/30, H01M 2/34, H01M 10/12

(54) **BATTERY TERMINAL STRUCTURE**
BATTERIEANSCHLUSSSTRUKTUR
STRUCTURE DE BORNE DE BATTERIE

(30) Priority: 16.01.2002 JP 2002006924
(43) Date of publication of application: 10.11.2004
(73) Proprietor: DAIHATSU MOTOR COMPANY, LTD., Ikeda-shi Osaka 563-8651 (JP)
(72) Inventor: ISHII, Yoshizumi, c/o DAIHATSU MOTOR CO., LTD., Ikeda-shi, Osaka 563-8651 (JP)
(74) Representative: Haley, Stephen
(86) International application number: PCT/JP2002/013472
(87) International publication number: WO 2003/061035

(56) References cited:
- GB-A- 200 654
- GB-A- 1 367 167
- JP-A- 9 106 801
- JP-U- 58 182 266
- JP-U- 59 109 070
- US-A- 4 006 282
- US-A- 6 030 723
- US-A- 6 030 723

## Description

The present invention relates to a battery terminal construction, and particularly to a battery terminal construction that is applicable to a battery arranged beneath the engine hood of an automobile engine room for effectively lowering the injury value for an obstacle which has been thrown up onto the engine hood.

### BACKGROUND ART

A battery for automobiles is typically arranged in an engine room and directly below an engine hood. As disclosed in Japanese Utility Model Laid-Open Publication No. Hei 5-77862, for example, the battery has a protruding terminal on the top face of the battery case so as to be connected with a power cable.

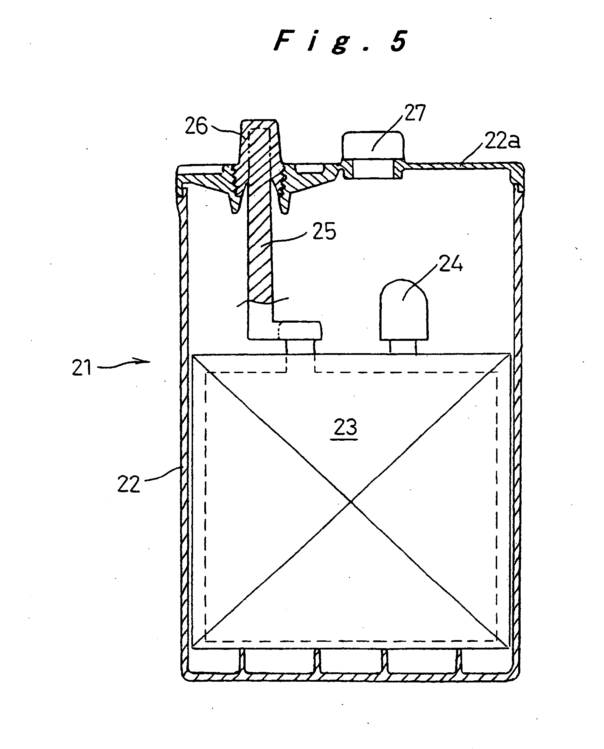

Describing a specific example with reference to Fig. 5, a battery 21 comprises a battery case 22 made of a synthetic resin and housing a plurality of electrode plate assemblies 23 comprising positive and negative electrode plates both made of lead together with an electrolyte solution of diluted sulfuric acid. The top face of the battery case 22 is sealed with a case cover 22a made of a synthetic resin by thermal welding. The plurality of electrode plate assemblies 23 are connected in series by a stripe 24, and a pole 25 made of lead is extended upward from the electrode plate assemblies 23 at the opposite ends and is thermally welded at the upper end thereof to a terminal portion 26 also made of lead. The terminal portion 26 is integrally formed when the case cover 22a is formed. The reference numeral 27 denotes an injection plug for tightly closing an injection port through which the electrolyte solution is injected into the battery case 22.

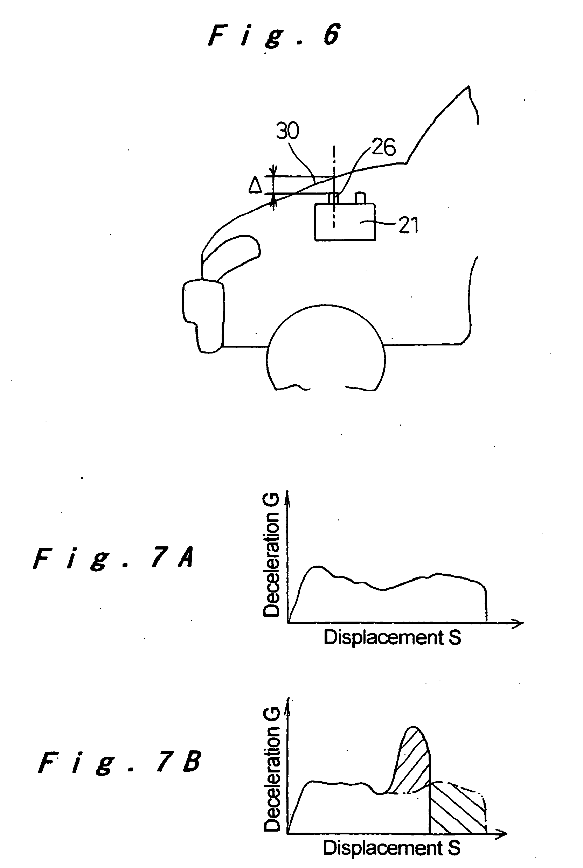

The battery 21 thus constructed is arranged in an automobile engine room and directly below an engine hood 30 with an appropriate gap Δ as shown in Fig. 6.

It should be noted that, in the battery 21 constructed as shown in Fig. 5, the terminal portion 26 having strength and rigidity protrudes up from the top face of the battery case 22. Since the battery 21 having such terminal portion is arranged in the engine room as shown in Fig. 6, if the automobile collides against and throws up an obstacle and the obstacle falls onto the engine hood 30, the engine hood 30 will cave in and the obstacle will collide against the terminal portion 26 of the battery 21 which is located directly below the engine hood 30.

If the gap Δ between the engine hood 30 and the terminal portion 26 of the battery 21 can be set sufficiently large, as shown in Fig. 7A, it will be possible to ensure enough displacement S to absorb all the collision energy at a deceleration G of a certain level or below. However, in practice, it is difficult to afford a sufficiently large gap Δ in view of achievement of space reduction and restrictions in arrangement of the engine room. If the gap A is not large enough, as shown in Fig. 7B, the displacement S is restricted largely at the time when the obstacle strikes the terminal portion 26, and hence the deceleration G is increased rapidly, the collision load exerted on the obstacle is increased, and accordingly the injury value becomes high.

In view of the aforementioned problems, an object of the present invention is to provide a battery terminal construction which is applicable to an automobile battery for lowering the injury value for an obstacle that has been thrown up onto an engine hood.

GB-A-200654, US-A-4006282, and GB-A-1367167 all disclose battery terminal constructions. Since the pole is contracted when a large load is exerted on the terminal portion from above and thus the downward displacement of the terminal portion is activated relatively easily, the injury value for an obstacle which is thrown up by the automobile and falls onto the engine room can be lowered even when the battery is arranged in an engine room and directly below an engine hood with a relatively small gap therebetween.

Energy absorption efficiency is adjusted according to the push-in load of the shaft portion pressed into the external tube portion.

Downward displacement of the terminal portion is not constrained by the case top face to inhibit the contraction movement of the pole and to make it impossible to obtain the energy absorption effect, and thus the absorption of energy is accelerated effectively and reliably to lower the injury value.
Fig. 1 is a longitudinal sectional view schematically showing the general configuration of an embodiment of a battery terminal construction according to the present invention;

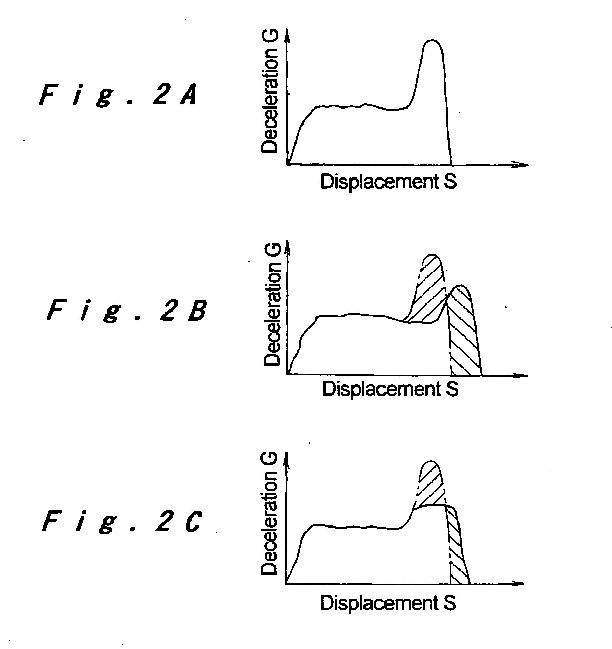

Figs. 2A to 2C are characteristics graphs showing the characteristics of deceleration and displacement of the terminal upon collision, Fig. 2A being a characteristics graph according to a conventional example, Fig. 2B being a characteristics graph according to the embodiment of the present invention in the case where the push-in load applied between the external tube portion and the shaft portion of the pole is relatively small, and Fig. 2C being a characteristics graph according to the same embodiment in the case where the push-in load applied between the external tube portion and the shaft portion of the pole is relatively large;
Fig. 3 is a perspective view showing a principal portion of another embodiment of a battery terminal construction according to the present invention;
Figs. 4A and 4B are longitudinal sectional views showing the operational processes of the embodiment;
Fig. 5 is a longitudinal sectional view schematically showing the general configuration of a battery terminal construction according to a conventional example;
Fig. 6 is an illustration showing the arrangement of a battery according to the conventional example; and
Figs. 7A and 7B are characteristics graphs showing the characteristics of deceleration and displacement of the terminal upon collision according to the conventional example, Fig. 7A being a characteristics graph when the gap between the terminal and the engine hood is large, and Fig. 7B being a characteristics graph when the gap between the terminal and the engine hood is small.

### BEST MODE FOR CARRYING OUT THE INVENTION

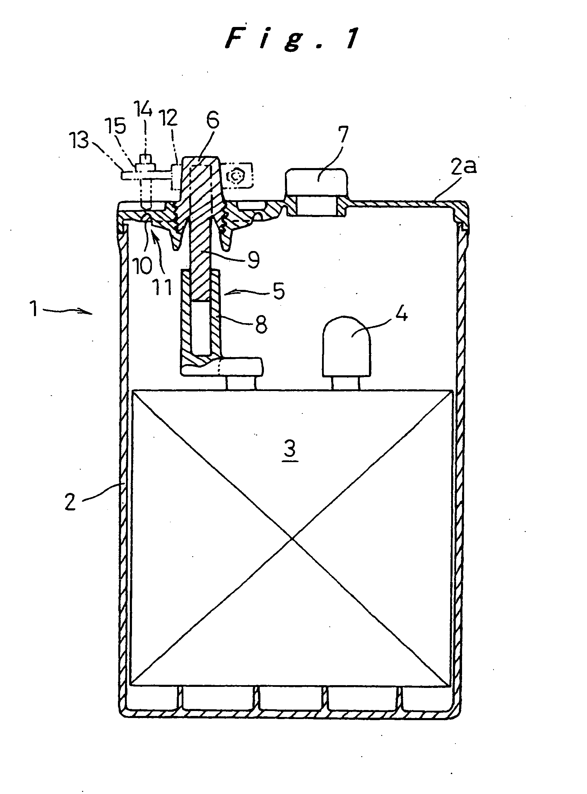

Hereinbelow, an embodiment of a battery terminal construction according to the present invention will be described with reference to Figs. 1 and 2A to 2C.

In Fig. 1, the reference numeral 1 denotes a battery arranged in an automobile engine room and directly below an engine hood with a gap Δ from the engine hood (see Fig. 6), and the battery 1 comprises a battery case 2 that is made of a synthetic resin and houses a plurality of electrode plate assemblies 3 comprising positive and negative electrode plates made of lead together with an electrolyte solution of diluted sulfuric acid. The top face of the battery case 2 comprises a case cover 2a made of a synthetic resin that is thermally welded. The plurality of electrode plate assemblies 3 are connected in series by a stripe 4, and a pole 5 made of lead is extended upward from the electrode plate assemblies 3 at the opposite ends and is thermally welded at the upper end thereof to a terminal portion 6 also made of lead. The terminal portion 6 is formed integrally with the case cover 2a when the case cover 2a is formed. The reference numeral 7 denotes an injection plug for tightly closing an injection port through which the electrolyte solution is injected into the battery case 2.

The pole 5 has a double-tube structure comprising an external tube portion 8 in the lower part and a shaft portion 9 in the upper part, the shaft portion 9 being pressed into the external tube portion 8, and is constructed such that the pole 5 can be contracted when a load exceeding a predetermined level is exerted on the terminal portion 6 from above. The push-in load may be set as desired by adjusting a difference between the inside diameter of the external tube portion 8 and the outside diameter of the shaft portion 9 (fitting interference) , and the quantity of absorbed energy with respect to displacement may be adjusted accordingly.

In the peripheral portion of the terminal portion 6 in the case cover 2a, there is formed a cut portion 10 continuously or intermittently to form a ring shape surrounding the terminal portion 6. This cut portion 10 constitutes a fragile portion 11 serving as breaking means which breaks the peripheral portion of the terminal portion 6 in the top face of the battery case 2 when a load exceeding a predetermined level is exerted on the terminal portion 6.

In the constitution as described above, a large load is exerted on the terminal portion 6 from above when the automobile collides against and throws up an obstacle, the obstacle falls down onto the engine hood to cause the engine hood to cave in and collides against the terminal portion 6 of the battery 1 located directly below the engine hood. When this happens, the shaft portion 9 of the pole 5 is pressed deep into the external tube portion 8 and the pole 5 is thereby contracted. In this manner, the downward displacement of the terminal portion 6 is achieved relatively easily to reduce the collision load, and the injury value for the obstacle is lowered.

More specifically, if the pole 5 cannot be contracted as in the conventional example, as shown in Fig. 2A, the change in displacement S drops sharply and the deceleration G increases sharply to a high value exceeding a predetermined level at the time when the engine hood caves in for a distance equal to the gap Δ and strikes the terminal portion 6, and thereby a large collision load is exerted on the terminal portion 6 to increase the injury value the obstacle.

In contrast, according to the present embodiment in which the pole 5 is constructed so as to be capable of being contracted with the push-in load set appropriately between the external tube portion 8 and the shaft portion 9, as shown in Fig. 2B, after the engine hood has caved in for a distance equal to the gap Δ and struck the terminal portion 6, the pole 5 is contracted and the terminal portion 6 is displaced by the distance that the pole 5 is contracted. In the meantime, the collision energy is absorbed according to the push-in load and the displacement. As a result, even though the deceleration G increases when the pole 5 reaches its contraction limit and the change in displacement S drops sharply, the increase of the deceleration G becomes small so that the deceleration G is limited to a predetermined value or lower and the injury value for the obstacle is lowered.

Further, if the pole 5 is constructed so as to be capable of being contracted with the push-in load set higher between the external tube portion 8 and the shaft portion 9, as shown in Fig. 2C, the pole 5 is contracted after the engine hood has caved in for a distance equal to the gap Δ and struck the terminal portion 6, and the terminal portion 6 is displaced by the distance that the pole 5 is contracted. In the meantime, the collision energy is absorbed before the pole 5 reaches its contraction limit by the absorption energy according to the push-in load and the displacement. As a result, the deceleration G is limited to a predetermined value that has been set and the injury value for the obstacle is lowered still more reliably.

In this manner, even when the battery 1 is arranged in an automobile engine room and directly beneath the engine hood with a relatively small gap Δ, the injury value for an obstacle that has been thrown up and fallen onto the engine hood is lowered.

Further, when the terminal portion 6 is subjected to a load exceeding a predetermined level and starts downward displacement, the case cover 2a is broken at the fragile portion 11 in the peripheral portion of the terminal portion 6. Thus, it is prevented that the downward displacement of terminal portion 6 is constrained by the case cover 2a and the contraction movement of the pole 5 is inhibited. As a result, the absorption of energy by the actions as described above is accelerated more effectively and reliably to lower the injury value.

Still further, since the pole 5 is constructed in a double-tube structure to enable the same to be contracted, the external tube portion 8 and the shaft portion 9 are in contact with each other in a large contact area and, therefore, the conducting resistance is made smaller in comparison with the case where the downward displacement of the terminal portion 6 is enabled by a spring or the like, and hence the problem of defective conduction is avoided.

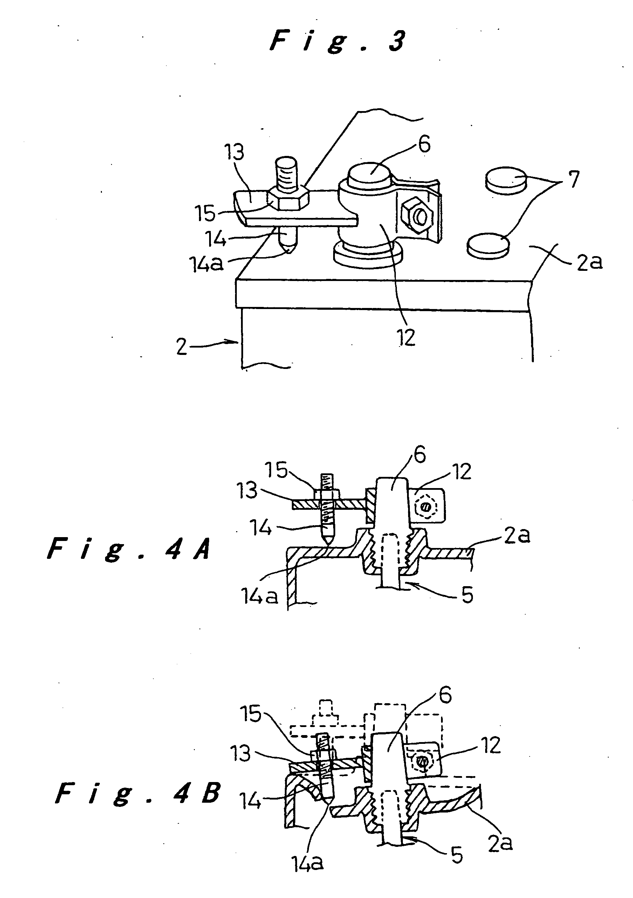

Next, another embodiment of the present invention will be described with reference to Figs. 3, 4A and 4B. In the description, similar components to the first embodiment are designated by the same reference numerals described above, and detailed description thereof is omitted. Only the key points will be described below.

In the first embodiment above, the breaking means is constituted by the fragile portion 11 formed in the peripheral portion of the terminal portion 6 in the case cover 2a, whereas in the present embodiment, as shown in Fig. 3, an arm 13 is provided on a clamping member 12 fitted and clamped on the outer circumference of the terminal portion 6 such that the arm 13 protrudes from the clamp member 12, and a hammering shaft 14 is mounted on the arm 13 such that the pointed thrusting portion 14a at the tip end thereof is directed to and placed in close proximity to the top face 2a of the battery case 2 and abuts against the top face 2a at the same time as or before the engine hood abuts against the terminal portion 6. Thus, the breaking means is constituted by this hammering shaft 14. The upper part of the hammering shaft 14 is threaded to be screwed into the arm 13 and affixed with a nut 15 so that the protrusion level of the hammering shaft 14 can be adjusted as desired depending on the automobile type.

In the constitution as described above, when the automobile collides against and throws up an obstacle, and the obstacle falls onto the engine hood, causing the engine hood to cave in, the obstacle strikes on the terminal portion 6 and hammering shaft 14 of the battery 1 located directly below the engine hood, via the engine hood, to exert a large load from above. The terminal portion 6 thereby starts downward displacement from the setup condition as shown in Fig. 4A to the condition as shown in Fig. 4B, at the same time as which or prior to which the peripheral portion of the terminal portion 6 in the case top face 2a is broken by the pointed thrusting potion 14a of the hammering shaft 14. Therefore, it is possible to prevent that the downward displacement of the terminal portion 6 is constrained by the case cover 2a to inhibit the contraction movement of the pole 5, and thus the absorption of energy by the actions as described above can be accelerated more effectively and reliably to lower the injury value.

Further, according to the present embodiment, the breaking means for breaking the peripheral portion of the terminal portion 6 in the case top face 2a when a load exceeding a predetermined level is exerted to the terminal portion 6 is provided on the clamp member 12 that is fitted and secured on the terminal portion 6, while no special construction is added to the battery case 2 side. Therefore, the aforementioned effects are obtained by using an existing battery without any change.

It should be noted that, also in the embodiment shown in Fig. 1, the hammering shaft 14 may be additionally provided as the breaking means as shown in phantom lines. In this case, while the fragile portion 11 is provided with enough strength not to be broken under ordinary condition of use, the peripheral portion of the terminal portion 6 is broken smoothly and reliably when subjected to a load exceeding a predetermined level, and hence the absorption of energy by the actions as described above is accelerated more effectively and reliably to lower the injury value.

### INDUSTRIAL APPLICABILITY

In the battery terminal construction according to the present invention, the pole, which has at the upper end thereof the terminal protruding up from the top face of the battery case, is constructed so as to be capable of being contracted when a large load is exerted on the terminal from above so that the downward displacement of the terminal is activated relatively easily. Therefore, the battery terminal construction of the invention, when applied to an automobile battery, is suitable for lowering the injury value for an obstacle which is hit and thrown up by the automobile and falls onto the engine hood.

## Claims

1. A battery terminal construction in which a terminal portion (6) is provided at an upper end of a pole ( 5) extended upward from an electrode plate assembly (3) housed in a battery case (2) so as to project up from a top face of the battery case (2), wherein: the pole (5) is constructed so as to be capable of being contracted by a load exerted from above by being constructed in a double-tube structure comprising an external tube portion (8) and a shaft portion (9), the shaft portion (8) being pressed into the external tube portion (9); and **characterised by** breaking means (11, 14) for breaking a terminal peripheral portion in the top face of the battery case (2) under a load exceeding a predetermined level exerted from above is provided.

## Patentansprüche

1. Batterieanschlussausgestaltung, bei der ein Anschlussabschnitt (6) an einem oberen Ende eines Pols (5) vorgesehen ist, der sich von einer Elektrodenplattenanordnung (3), die in einem Batteriegehäuse (2) untergebracht ist, aufwärts erstreckt, so dass der Anschlussabschnitt (6) sich von einer oberen Fläche des Batteriegehäuses (2) aufwärts vorsteht, wobei der Pol (5) derart aufgebaut ist, dass er durch eine von oben aufgebrachte Last kontrahiert werden kann, indem er mit einer Doppel-Röhren-Struktur mit einem äußeren Röhrenabschnitt (8) und einem Schaftabschnitt (9) aufgebaut ist, wobei der Schaftabschnitt (8) in den äußeren Röhrenabschnitt (9) gedrückt wird, **gekennzeichnet durch** Bruchmittel (11, 14) zum Aufbrechen eines Anschlussrandabschnitts in der oberen Fläche des Batteriegehäuses (2) unter einer Last, die von oben aufgebracht wird und ein vorbestimmtes Niveau überschreitet.

## Revendications

1. Structure des bornes d'une batterie dans laquelle une partie (6) à bornes est prévue au niveau d'une extrémité supérieure d'un pôle (5) qui s'étend vers le haut d'un ensemble (3) de plaques d'électrodes reçu dans un boîtier (2) de la batterie afin de se projeter d'une face supérieure du boîtier (2) de la batterie, dans laquelle: le pôle (5) est construit de façon à pouvoir être contracté par une charge exercée par le haut en étant construit selon une structure à double tube comprenant une partie (8) de tube externe et une partie (9) d'arbre, la partie (8) d'arbre étant pressée dans la partie (9) de tube externe; et **caractérisée par** le fait de prévoir un moyen (11, 14) de rupture pour rompre une partie périphérique des bornes dans la face supérieure du boîtier (2) de la batterie sous une charge, qui dépasse un niveau prédéterminé, exercée par le haut.
